Europäisches Patentamt

(19) European Patent Office

Office européen des brevets

(11) Numéro de publication : **0 014 954**
**B1**

(12) **FASCICULE DE BREVET EUROPÉEN**

(45) Date de publication du fascicule du brevet :
**24.11.82**

(21) Numéro de dépôt : **80100726.1**

(22) Date de dépôt : **13.02.80**

(51) Int. Cl.³ : **B 60 T   8/26**, B 60 T 17/18,
**B 60 K 17/34**

(54) Dispositif de répartition de freinage à adhérence totale.

(30) Priorité : **16.02.79 FR 7904078**

(43) Date de publication de la demande :
**03.09.80 (Bulletin 80/18)**

(45) Mention de la délivrance du brevet :
**24.11.82 Bulletin 82/47**

(84) Etats contractants désignés :
**BE DE GB IT NL SE**

(56) Documents cités :
**FR A 1 054 789**

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Vuaillat, René**
**13, Chemin Desvallières**
**F-92410 Ville d'Avray (FR)**

(74) Mandataire : **Casalonga, Alain et al**
**BUREAU D.A. CASALONGA OFFICE JOSSE & PETIT**
**Baaderstrasse 12-14**
**D-8000 München 5 (DE)**

EP 0 014 954 B1

Dispositif de répartition de freinage à adhérence totale.

La présente invention se rapporte à un dispositif de répartition de freinage à adhérence totale pour véhicule automobile comprenant une roue libre reliant deux demi-arbres de transmission qui aboutissent à un différentiel monté sur chaque essieu, cette roue libre se bloquant lorsqu'un essieu est plus freiné et assurant ainsi un transfert du freinage sur l'autre essieu.

On connaît déjà, d'après le brevet FR 1 054 789, un dispositif de transmission à roue libre avec un freinage incorporé. Dans ce dispositif le moteur, obligatoirement placé à l'arrière, entraîne les roues arrière par un différentiel et les roues avant par un demi-arbre arrière, une roue libre et un demi-arbre avant attaquant un autre différentiel. En ligne droite les quatre roues sont entraînées par l'intermédiaire de la roue libre, tandis qu'en courbe, seules les roues arrière sont entraînées, les roues avant prenant une survitesse autorisée par le sens choisi pour la roue libre. En outre un frein, obligatoirement unique et agissant sur le demi-arbre avant, transmet un freinage uniforme sur les quatre roues par la roue libre et les deux différentiels. Cependant toute perte d'adhérence sur une roue supprime toute transmission de couple à l'autre roue du même essieu. Pour cette raison on n'emploie plus actuellement que des dispositifs de freinage à adhérence totale avec freinage individuel des quatre roues, qui sont seuls concernés par l'invention, mais qui posent alors le problème de la répartition du freinage entre les quatre freins.

Dans la plupart des véhicules automobiles, la répartition du freinage est linéaire entre freins avant et freins arrière, donc suivant de très loin la parabole d'équiadhérence.

Une amélioration connue est l'emploi de répartiteurs de freinage qui peuvent être de deux sortes :
— les limitateurs où, à partir d'une certaine valeur, la pression n'augmente plus dans l'essieu arrière,
— les compensateurs où, à partir d'une certaine valeur de la pression, on passe par un piston différentiel pour alimenter l'essieu arrière.

Pour améliorer leurs performances, ces deux types de dispositifs peuvent être asservis à la charge.

Tous ces types de répartition de freinage donnent une courbe de variation de la traînée arrière en fonction de la traînée avant qui est composée de 1 ou 2 segments de droite relativement éloignés de la parabole d'équiadhérence pour une charge donnée du véhicule surtout au milieu de ces segments de droite. Or, on utilise d'autant plus mal les possibilités du freinage, pour une adhérence donnée, que la répartition réelle est éloignée de la répartition de l'équiadhérence.

La présente invention permet d'éviter ces inconvénients et son but est donc de réaliser un dispositif de répartition de freinage qui suive automatiquement la parabole d'équiadhérence quels que soient la charge du véhicule et le dimensionnement des freins.

A cet effet, l'invention a pour objet un dispositif de répartition de freinage à adhérence totale pour véhicule automobile ayant un essieu avant et un essieu arrière, comportant un différentiel monté sur chacun des essieux et deux demi-arbres de transmission reliés, d'une part, à chacun desdits différentiels et, d'autre part, à une roue libre quelconque connue en soi, laquelle roue libre est disposée de telle façon que l'essieu le plus freiné et qui a tendance à se bloquer en premier est également relié au demi-arbre de transmission qui est la sortie de la roue libre, la vitesse de sortie de la roue libre étant supérieure à la vitesse d'entrée lorsque les roues avant et arrière tournent à la même vitesse circonférentielle :
— suivant un mode de réalisation préféré de l'invention, le dispositif de répartition de freinage comporte un système de freinage à prédominance arrière qui est combiné avec une roue libre dont l'entrée est reliée à l'essieu avant et la sortie est reliée à l'essieu arrière,
— suivant un mode de réalisation préféré de l'invention, le dispositif de répartition de freinage comporte un système de freinage à prédominance avant qui est combiné avec une roue libre dont la sortie est reliée à l'essieu avant et l'entrée est reliée à l'essieu arrière,
— suivant un mode de réalisation préféré de l'invention, le dispositif de répartition de freinage comporte un système de freinage à prédominance arrière qui est combiné avec une roue libre dont l'entrée est reliée à l'essieu avant et la sortie est reliée à l'essieu arrière ; ce système de freinage étant à double circuit séparé, un circuit pour les roues avant et un circuit pour les roues arrière, de façon à assurer un freinage sur les roues avant en cas de défaillance du système de freinage avant.

Un tel dispositif suivant l'invention présente ainsi l'avantage d'obtenir une répartition de freinage automatique qui suit exactement la parabole d'équiadhérence et cela quels que soient la charge du véhicule et le dimensionnement des freins. Un autre avantage de l'invention est qu'elle permet de donner une sécurité supplémentaire au système de freinage à circuit séparé, en garantissant un freinage sur les roues avant en cas de défaillance du circuit avant.

D'autres caractéristiques et avantages de la présente invention ressortiront de la description qui suit de modes de réalisation donnés à titre d'exemple, en référence aux dessins annexes sur lesquels :
la figure 1 représente le schéma du dispositif de répartition de freinage selon l'invention comportant un système de freinage à prédominance arrière ;
la figure 2 représente le schéma du dispositif de répartition de freinage selon l'invention comportant un système de freinage à prédominance avant ;

la figure 3 représente le schéma du dispositif de répartition de freinage selon l'invention comportant un système de freinage à prédominance arrière et à double circuit séparé.

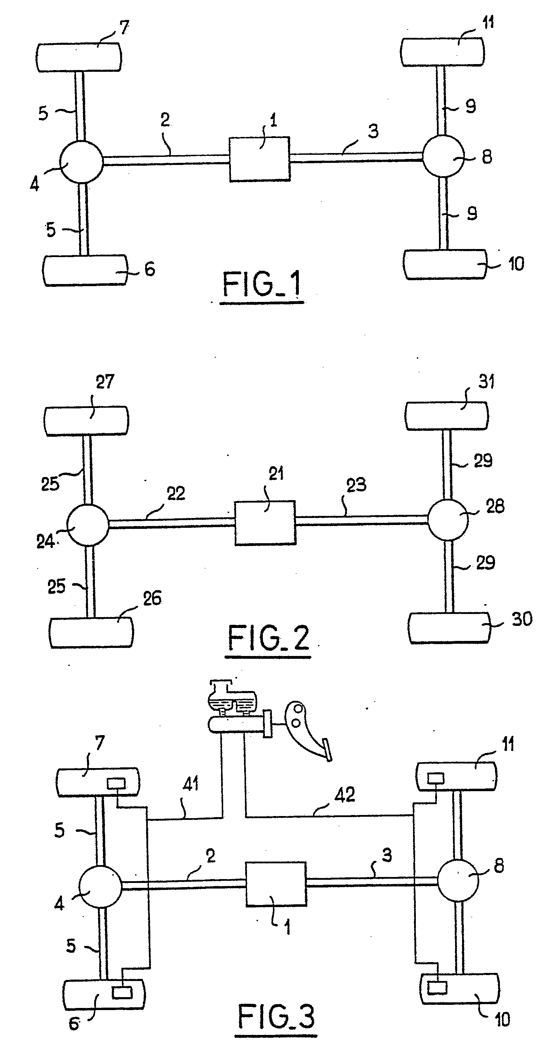

Le dispositif de répartition de freinage à adhérence totale représenté sur la fig. 1 comprend :

— une roue libre à système d'armement 1 d'un type quelconque où lorsque la différence des vitesses, entre ce qui est appelé la sortie et ce qui est appelé l'entrée, est ramenée à une certaine valeur, ladite roue libre s'enclenche et se bloque,

— un demi-arbre de transmission avant 2 relié à l'entrée de la roue libre 1,

— un demi-arbre de transmission arrière 3 relié à la sortie de la roue libre 1,

— un différentiel 4 monté sur l'essieu 5 des roues avant 6 et 7 et relié au demi-arbre de transmission avant 2,

— un différentiel 8 monté sur l'essieu 9 des roues arrière 10 et 11 et relié au demi-arbre de transmission arrière 3,

— un dispositif de freinage à prédominance arrière non représenté sur la fig. 1.

Le dispositif selon l'invention de la fig. 1 fonctionne de la manière suivante. Par conception du dispositif, lorsque les roues avant et arrière tournent à la même vitesse circonférencielle, la vitesse de sortie de la roue libre est supérieure à la vitesse d'entrée. Cette différence de vitesse peut ainsi être donnée par les rapports différents des couples coniques de chacun des ponts des différentiels 4 et 8. En cas de freinage, du fait que le dispositif de freinage est à prédominance arrière, les roues arrière ralentissent plus que les roues avant, c'est-à-dire que le demi-arbre de transmission arrière 3 qui est la sortie de la roue libre 1 ralentit plus que le demi-arbre de transmission avant 2 qui est l'entrée de la roue libre 1 et la différence des vitesses entre la sortie et l'entrée diminue jusqu'à une certaine valeur pour laquelle la roue libre 1 s'enclenche et se bloque. L'essieu avant 5 est alors solidaire de l'essieu arrière 9 et il y a alors transfert du freinage de l'essieu arrière qui est le plus freiné vers l'essieu avant qui est le moins freiné, rétablissant ainsi automatiquement l'équiadhérence au freinage sur les quatre roues.

Le dispositif de répartition de freinage selon l'invention travaille donc bien suivant la parabole d'équiadhérence.

Le dispositif de répartition de freinage à adhérence totale, représenté sur la fig. 2, est d'une architecture similaire à celui de la fig. 1 et comprend :

— une roue libre à système d'armement 21 d'un type identique à la roue libre 1,

— un demi-arbre de transmission avant 22 relié à la sortie de la roue libre 21,

— un demi-arbre de transmission arrière 23 relié à l'entrée de la roue libre 21,

— un différentiel 24 monté sur l'essieu 25 des roues avant 26 et 27 et relié au demi-arbre de transmission avant 22,

— un différentiel 28 monté sur l'essieu 29 des roues arrière 30 et 31 et relié au demi-arbre de transmission arrière 23,

— un dispositif de freinage à prédominance avant non représenté sur la fig. 2.

Le dispositif selon l'invention de la fig. 2 fonctionne d'une manière similaire à celui de la fig. 1.

Par conception du dispositif, lorsque les roues avant et arrière tournent à la même vitesse circonférentielle, la vitesse de sortie de la roue libre est supérieure à la vitesse d'entrée.

En cas de freinage, du fait que le dispositif de freinage est à prédominance avant, les roues avant ralentissent plus que les roues arrière, c'est-à-dire que le demi-arbre de transmission avant 22 qui est la sortie de la roue libre 21 ralentit plus que le demi-arbre de transmission arrière 23 qui est l'entrée de la roue libre 21 et la différence des vitesses entre la sortie et l'entrée diminue jusqu'à une certaine valeur pour laquelle la roue libre 21 s'enclenche et se bloque. L'essieu arrière 29 est alors solidaire de l'essieu avant 25 et il y a alors transfert du freinage de l'essieu avant qui est le plus freiné vers l'essieu arrière qui est le moins freiné, rétablissant ainsi automatiquement l'équiadhérence au freinage sur les quatre roues. Le dispositif travaille comme pour le cas de la fig. 1 suivant la parabole d'équiadhérence.

Le dispositif de répartition de freinage à adhérence totale représentée sur la fig. 3 est d'une architecture identique à celui de la fig. 1. Il comprend les mêmes éléments et, notamment, un dispositif de freinage à prédominance arrière, mais ce dispositif de freinage est commandé par un système à double circuit séparé, un circuit 41 pour les roues avant 6 et 7 et un circuit 42 pour les roues arrière 10 et 11. Le dispositif fonctionne de façon identique à celui de la fig. 1 et, en cas de défaillance du circuit 41 des roues avant, il permet un transfert du freinage de l'essieu arrière vers l'essieu avant, en rétablissant automatiquement l'équiadhérence au freinage sur les quatre roues.

**Revendications**

1. Dispositif de répartition de freinage à adhérence totale pour véhicule automobile ayant un essieu avant (5 ; 25), un essieu arrière (9 ; 29) et quatre roues (6, 7, 10, 11 ; 26, 27, 30, 31) à freinage individuel, comportant un différentiel (4, 8 ; 24, 28) monté sur chacun des essieux (5, 9 ; 25, 29) et deux demi-arbres de transmission (2, 3 ; 22, 23) reliés, d'une part, à chacun desdits différentiels (4, 8 ; 24, 28) et, d'autre part, à une roue libre quelconque (1 ; 21) connue en soi, caractérisé en ce que ladite roue libre (1 ; 21) est disposée de telle façon que l'essieu le plus freiné (9 ; 25) et qui a tendance à se bloquer en premier est également relié au demi-arbre de transmission (3 ; 22) qui est la sortie de la roue libre (1 ; 21), la vitesse de sortie de la roue libre étant supérieure à la vitesse d'entrée (2 ; 23) lorsque les roues avant (6, 7 ; 26, 27) et arrière (10, 11 ; 30, 31) tournent à la même vitesse circonférentielle.

2. Dispositif de répartition de freinage selon la revendication 1, caractérisé en ce qu'un système de freinage à prédominance arrière est combiné avec une roue libre (1) dont l'entrée (2) est reliée à l'essieu avant (5) par l'intermédiaire d'un différentiel (4) et la sortie (3) est reliée à l'essieu arrière (9) par l'intermédiaire d'un différentiel (8).

3. Dispositif de répartition de freinage selon la revendication 1, caractérisé en ce qu'un système de freinage à prédominance avant est combiné avec une roue libre (21) dont la sortie (22) est reliée à l'essieu avant (25) par l'intermédiaire d'un différentiel (24) et l'entrée (23) est reliée à l'essieu arrière (29) par l'intermédiaire d'un différentiel (28).

4. Dispositif de répartition de freinage selon la revendication 2, caractérisé en ce qu'il se combine avec un système de freinage à double circuit séparé, un circuit (41) pour les roues avant et un circuit (42) pour les roues arrière, assurant ainsi un freinage sur les roues avant en cas de défaillance du système de freinage avant.

## Claims

1. A total adhesion braking distribution device for automotive vehicle having a front axle (5 ; 25), a rear axle (9 ; 29) and four individually-braked wheels (6, 7, 10, 11 ; 26, 27, 30, 31) comprising a differential (4, 8 ; 24, 28) mounted on each of the axles (5, 9 ; 25, 29) and two transmission half-shafts (2, 3 ; 22, 23) connected firstly to each of the said differentials (4, 8 ; 24, 28) and secondly to any type of free wheel (1 ; 21) known per se, characterized in that the said free wheel (1 ; 21) is arranged in such a way that the axle which is braked most (9 ; 29) and which tends to be locked first is also connected to the transmission half-shaft (3 ; 22) which is the free wheel (1 ; 21) output, with the free wheel output speed exceeding the input speed (2 ; 23) when the front (6, 7 ; 26, 29) and rear (10, 11 ; 30, 31) wheels are rotating at the same circumferential speed.

2. The braking distribution device according to claim 1, characterized in that a braking system with the rear predominant is combined with a free wheel (1) the input (2) of which is connected to the front axle (5) through a differential (4) and whose output (3) is connected to the rear axle (9) through a differential (8).

3. The braking distribution device according to claim 1, characterized in that a braking system with the front predominant is combined with a free wheel (21) whose output (22) is connected to the front axle (25) through a differential (24) and whose input (23) is connected to the rear axle (29) through a differential (28).

4. The braking device according to claim 2, characterized in that it is combined with a separate double circuit braking system, one circuit (41) for the front wheels and one circuit (42) for the rear wheels, thus providing braking on the front wheels in the case of failure of the front braking system.

## Ansprüche

1. Vorrichtung zur Bremskraftverteilung mit Totalhaftung für Kraftfahrzeuge mit einer Vorderachse (5 ; 25) einer Hinterachse (9 ; 29) und vier einzelgebremsten Rädern (6, 7, 10, 11 ; 26, 27, 30, 31), die ein auf jede der Achsen (5, 9 ; 25, 29) montiertes Ausgleichsgetriebe (4, 8 ; 24, 28) und zwei Antriebswellen (2, 3 ; 22, 23) zur Kraftübertragung umfasst, die einerseits mit den genannten Ausgleichsgetrieben (4, 8 ; 24, 28) und andererseits mit einer beliebigen als solches bekannten Freilaufkupplung (1 ; 2) verbunden sind, dadurch gekennzeichnet, dass die genannte Freilaufkupplung (1 ; 21) so angeordnet ist, dass die stärker gebremste Achse (9 ; 25) die die Tendenz hat, zuerst zu blockieren, auch mit der Antriebswelle (3 ; 22) verbunden ist, die der Ausgang der Freilaufkupplung (1 ; 21) ist, wobei die Abtriebsdrehzahl der Freilaufkupplung über der Antriebsdrehzahl (2 ; 23) liegt, sobald sich die Vorderräder (6, 7 ; 26, 27) und Hinterräder (10, 11 ; 30, 31) mit der gleichen Umfangsgeschwindigkeit drehen.

2. Vorrichtung zur Bremskraftverteilung gemäss Anspruch 1, dadurch gekennzeichnet, dass es Bremssystem mit vorrangigen Wirkung auf die Hinterräder mit einer Freilaufkupplung (1) kombiniert ist, deren Eingang (2) über ein Ausgleichsgetriebe (4) mit der Vorderachse (5), und deren Ausgang (3) über ein Ausgleichsgetriebe (8) mit der Hinterachse (9) verbunden ist.

3. Vorrichtung zur Bremskraftverteilung gemäss Anspruch 1, dadurch gekennzeichnet, dass ein Bremssystem mit vorrangiger Wirkung nach vorne mit einer Freilaufkupplung (21) kombiniert ist, deren Ausgang (22) über ein Ausgleichsgetriebe (24) mit der Vorderachse (25), und deren Eingang über ein Ausgleichsgetriebe (28) mit der Hinterachse (29) verbunden ist.

4. Vorrichtung zur Bremskraftverteilung gemäss Anspruch 2, dadurch gekennzeichnet, dass sie mit einem Bremssystem mit gesondertem Doppelbremskreislauf kombiniert ist, wobei ein Bremskeislauf (41) auf die Vorderräder und ein Bremskreislauf (42) auf die Hinterräder wirkt, wodurch bei Ausfall des Vorderradbremssystems eine Bremswirkung auf die Vorderräder gesichert ist.

FIG_1

FIG_2

FIG_3